# EUROPEAN PATENT SPECIFICATION

(11) **EP 2 892 180 B1**
(45) Date of publication and mention of the grant of the patent: **26.04.2017**
(21) Application number: 13842315.7
(22) Date of filing: 29.05.2013
(51) Int. Cl.: H04L 12/24, H04L 12/723, H04L 12/707, H04L 12/26, H04L 12/703

(54) **SERVICE TRAFFIC PROTECTION METHOD AND APPARATUS**
DIENSTVERKEHRSSCHUTZVERFAHREN UND -VORRICHTUNG
PROCÉDÉ ET APPAREIL DE PROTECTION DU TRAFIC D'UN SERVICE

(30) Priority: 26.09.2012 CN 201210362700
(43) Date of publication of application: 08.07.2015
(73) Proprietor: Huawei Technologies Co., Ltd., Longgang District Shenzhen, Guangdong 518129 (CN)
(72) Inventor: FEI, Jingde, Shenzhen Guangdong 518129 (CN); YE, Jian, Shenzhen Guangdong 518129 (CN); CAI, Hengguang, Shenzhen Guangdong 518129 (CN); GAO, Hongbo, Shenzhen Guangdong 518129 (CN); JIANG, Jiameng, Shenzhen Guangdong 518129 (CN); YANG, Yang, Shenzhen Guangdong 518129 (CN)
(74) Representative: Pfenning, Meinig & Partner mbB
(86) International application number: PCT/CN2013/076361
(87) International publication number: WO 2014/048126

(56) References cited:
- CN-A- 101 060 442
- CN-A- 101 789 879
- CN-A- 101 820 317
- CN-A- 102 264 088
- CN-A- 102 571 458
- CN-A- 102 904 816
- US-A1- 2006 013 126
- US-A1- 2010 135 291
- US-A1- 2012 163 163
- US-A1- 2012 195 190
- M. Carugi,D. McDysan: "Service Requirements for Layer 3 Provider Provisioned Virtual Private Networks (PPVPNs)", Network Working Group , 1 May 2005 (2005-05-01), pages 1-50, XP002749481, Network Working Group Retrieved from the Internet: URL:http://tools.ietf.org/html/rfc4031 [retrieved on 2015-10-28]
- HAQUE A ET AL: "Group shared protection (GSP): a scalable solution for spare capacity reconfiguration in mesh WDM networks", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 3, 29 November 2004 (2004-11-29), pages 2029-2035, XP010757871, DOI: 10.1109/GLOCOM.2004.1378350 ISBN: 978-0-7803-8794-2

## Description

### TECHNICAL FIELD

The present invention, relates to the field of network communications, and in particular, to a method and an apparatus for protecting service traffic.

### BACKGROUND

In a Border Gateway Protocol (full English name: Border Gateway Protocol, BGP for short) or multi-protocol label switching (full English name: Multi-Protocol Label Switching, MPLS for short) layer 3 virtual private network (full English name: Layer 3 Virtual Private Network, L3VPN for short), a protection group, for example, an automatic protection switching (full English name: Automatic Protection Switching, APS for short) technology or fast reroute (full English name: Fast ReRoute, FRR for short) technology, is configured to implement fast switching when an intermediate network or a link fails, and implement fast switching of services.

In a BGP/MPLS L3VPN network, a protection group includes two forwarding tunnels, that is, an active tunnel and a standby tunnel. That the BGP floods private network routes depends on the Interior Gateway Protocol (full English name: Interior Gateway Protocol, IGP for short), but there are generally multiple paths in a network topology, which means that paths for the BGP to flood private network routes are not limited to the two paths of the active and standby tunnels. Therefore, when the active and standby tunnels fail at the same time, a BGP peer (full English name: PEER) session may still keep normal, but in the prior art, that the standby tunnel fails cannot be perceived. As a result, a provider edge router (full English name: Provider Edge, PE for short) device still maintains a current private network routing table and a corresponding label resource. In this case, forwarding of service traffic to a path of the standby tunnel is still continued, thereby causing interruption of all services.

"Service Requirements for Layer 3 Provider Provisioned Virtual Private Networks (PPVPNs)" (Network Working Group, 1 May 2005) provides requirements for L3VPNs.

US2012163163A1 discloses a protection switching apparatus which includes: a path management unit to establish a plurality of connection paths for transmitting/receiving packets, and a plurality of protection paths that are able to substitute for the plurality of connection paths, respectively, and to create a protection group including the connection paths and the protection paths; a protection group controller to determine whether failure has occurred on the connection paths, based on path state information for each path included in the protection group, the path state information stored in the protection group table storage, and to issue an instruction for protection switching, according to the result of the determination; and a protection switching unit to perform protection switching of a path in which failure has occurred to a protection path corresponding to the path in which failure has occurred, according to the instruction for protection switching.

US2010135291A1 discloses a method of controlling traffic forwarding in a Provider Backbone-Traffic Engineered (PBB-TE) network. A protection group (PG) is defined, and including N working Traffic Engineered Service Instances (TESIs) and M protection TESIs. An Automatic Protection Switching Protocol Data Unit (APS PDU) is defined, which includes information defining at least a state of the protection group, This APS PDU is forwarded only through the protection TESI(s).

CN101820317A discloses a method and a system for realizing protection switching (PS) of protection groups. The method comprises the following steps: receiving protection switching events sent by a protection controller after performing protection switching on the protection groups through a network management system; verifying whether all the protection groups are successful in protection switching or not according to the protection switching events; and if not, notifying the protection controller to execute protection switching operation on the protection groups which fails to be performed with the protection switching. The problem of incapability of realizing switching on services due to various reasons in the relevant technologies is solved, thus being capable of improving the success rate of protection switching of the protection groups.

US2006013126 A1 discloses an apparatus and a method for tunnel failure notification, wherein, when a failure occurs in the line of a communication network for transmitting packets using a tunnel, the disconnection messages of a plurality of tunnels which pass through the line are unified, and the occurrence of the failure is notified to an adjacent node for each line and then, the tunnels are disconnected or switched based on a failure notice.

US2012195190A1 discloses a method for solving communication failure includes transmitting user traffic over an automatic protection switching ("APS") connection between a near network node and a far network node, determining that a protect path on the APS connection has failed, sending a message to the far network node that the protect path has failed, and switching user traffic to the working path at the near network node.

"Group Shared Protection (GSP): A Scalable Solution for Spare Capacity Reconfiguration in Mesh WDM Networks" (Haque A et al, IEEE Communication s Society Globecom 2004) discloses GSP in mesh Wave length Division Multiplexing networks with dynamically arrived connection requests.

### SUMMARY

A technical problem to be solved by embodiments of the present invention is to provide a method and an apparatus for protecting service traffic, which can perceive a state of a protection group in time, thereby avoiding a service interruption problem resulting from that service traffic is still sent to the protection group when the protection group is invalid.

To solve the technical problem, a method and an apparatus used for a BGP/MPLS L3VPN network or a HoVPN network for protecting service traffic are disclosed according to subject matter of the independent claims of the application. Further advantages are achieved by the features of the dependent claims.

By implementing the technical solutions of the present invention, a state of a protection group can be perceived in time, thereby avoiding a service interruption problem resulting from that service traffic is still sent to the protection group when the protection group is invalid.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1A is a schematic flowchart of an embodiment of a method for protecting service traffic according to the present invention;
FIG 1B is a schematic diagram of a forwarding table according to the present invention;
FIG. 2 is a schematic flowchart of a method for updating state information of a protection group according to the present invention;
FIG. 3A is a schematic flowchart of another embodiment of a method for protecting service traffic according to the present invention;
FIG. 3B is a schematic diagram of another forwarding table according to the present invention;
FIG. 4A is a schematic structural diagram of an embodiment of an apparatus for protecting service traffic according to the present invention;
FIG. 4B is a schematic structural diagram of a processing module of an apparatus for protecting service traffic as shown in FIG. 4A;
FIG. 5 is a schematic structural diagram of another embodiment of an apparatus for protecting service traffic according to the present invention;
FIG. 6A is a schematic structural diagram of still another embodiment of an apparatus for protecting service traffic according to the present invention;
FIG. 6B is a schematic structural diagram of yet another embodiment of an apparatus for protecting service traffic according to the present invention;
FIG. 6C is a schematic structural diagram of a first processing module of an apparatus for protecting service traffic as shown in FIG. 6A;
FIG. 6D is a schematic structural diagram of a second processing module of an apparatus for protecting service traffic as shown in FIG. 6A; and
FIG. 7 is a schematic structural diagram of a fourth embodiment of an apparatus for protecting service traffic according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

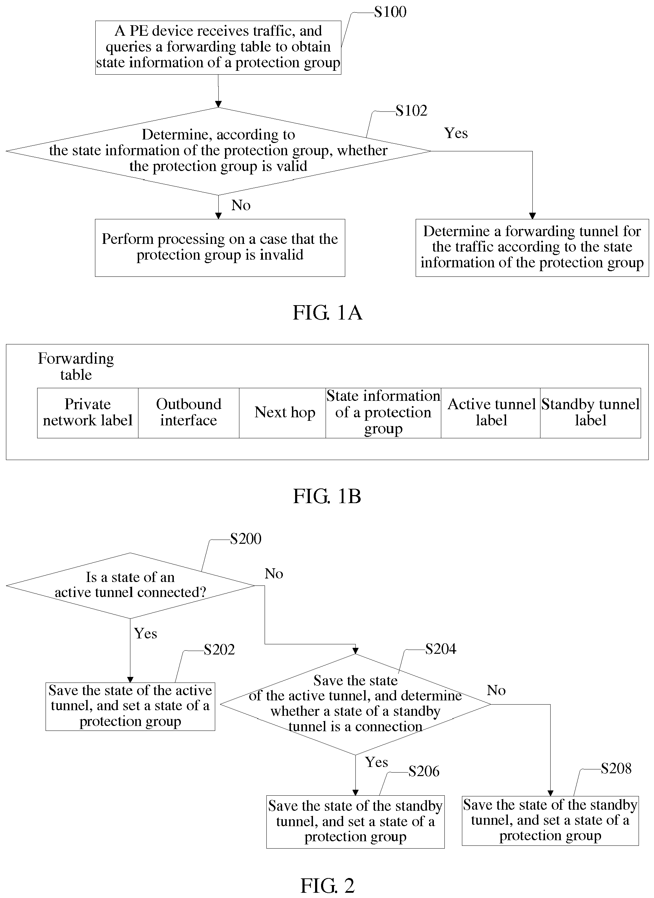

FIG. 1A is a schematic flowchart of an embodiment of a method for protecting service traffic according to the present invention. As shown in FIG. 1A, the method includes:
S100. A PE device receives traffic, and queries a forwarding table to obtain state information of a protection group, where the state information of the protection group includes connectivity information of an active tunnel and connectivity information of a standby tunnel.

Optionally, in an implementation manner of the embodiment of the present invention, the foregoing forwarding table includes a forwarding entry, where the forwarding entry includes the state information of the forgoing protection group. Further, optionally, the forwarding entry may further include one or more of the following information: a private network label, an outbound interface, a next hop, an active tunnel label, and a standby tunnel label. Exemplarily, a part of content in the forwarding table is shown in FIG. 1B.

S102. Determine, according to the state information of the protection group, whether the protection group is valid; if the protection group is valid, determine a forwarding tunnel for the traffic according to the state information of the protection group; and if the protection group is invalid, perform processing on a case that the protection group is invalid.

Optionally, if both the connectivity information of the active tunnel and the connectivity information of the standby tunnel indicate disconnection, that is, if both the active tunnel and the standby tunnel fail, it is determined that the protection group is invalid; otherwise, if at least one of the connectivity information of the active tunnel and the connectivity information of the standby tunnel indicates a connection, it is determined that the protection group is valid.

For example, when both the active tunnel and the standby tunnel are connected, or when the active tunnel is connected but the standby tunnel is faulty, or when the active tunnel is faulty but the standby tunnel is connected, the protection group is in a valid state. In this case, the PE device may determine, according to the state information of the protection group, that a tunnel in a connected state is a forwarding tunnel. For example, when the active tunnel is connected but the standby tunnel is faulty, it is determined that the active tunnel is a forwarding tunnel for the traffic. When the standby tunnel is connected but the active tunnel is faulty, it is determined that the standby tunnel is a forwarding tunnel for the traffic. When both the active tunnel and the standby tunnel are connected, it is preferably determined that the active tunnel is a forwarding tunnel for the traffic.

When both the active tunnel and the standby tunnel are faulty, it is determined that the protection group is invalid. In this case, processing is performed on a case that the protection group is invalid. For example, an alarm that the protection group is invalid may be reported, so that network management and maintenance personnel can know that the protection group is already in an invalid state. For another example, another protection group (for example, a standby protection group) may be selected to protect the service traffic.

Optionally, in a case in which the protection group is valid, if a tunnel is faulty, a fault alarm of the protection group may also be reported, so that network management and maintenance personnel can know that a certain tunnel in the protection group is faulty. For example, when the active tunnel is faulty, a fault alarm of the active tunnel may be reported; and when the standby tunnel is faulty, a fault alarm of the standby tunnel may be reported.

In this embodiment the state of the protection group can be perceived in time, thereby avoiding a service interruption problem resulting from that service traffic is still sent to the protection group when the protection group is invalid.

Optionally, in an implementation manner of the embodiment of the present invention, connectivity of the active tunnel and the standby tunnel may be detected by using an operation, administration and maintenance (Operation Administration and Maintenance, OAM) technology or a bidirectional forwarding detection (Bidirectional Forwarding Detection, BFD) technology.

Referring to FIG. 2, the PE device may obtain and maintain the state information of the protection group in the following manner:
S200. Detect connectivity of the active tunnel by using the OAM or BFD technology; and if the active tunnel is connected, perform S202, otherwise, perform S204.
S202. Save the connectivity information of the active tunnel in a state machine, and set, according to the connectivity information of the active tunnel saved in the state machine, the state information of the protection group in the forwarding table to that the active tunnel is connected.

In this case, connectivity of the standby tunnel may also continue to be detected and saved in the state machine.

S204. Save the connectivity information of the active tunnel in the state machine, and detect connectivity of the standby tunnel by using the OAM or BFD technology; and if the standby tunnel is connected, perform S206; otherwise, perform S208.

S206. Save the connectivity information of the standby tunnel in the state machine, and set, according to the connectivity information of the active tunnel and the standby tunnel saved in the state machine, the state information of the protection group in the forwarding table to that the active tunnel is not connected and the standby tunnel is connected.

S208. Save the connectivity information of the standby tunnel in the state machine, and set, according to the connectivity information of the active tunnel and the standby tunnel saved in the state machine, the state information of the protection group in the forwarding table to that both the active tunnel and the standby tunnel are not connected, that is, the protection group is invalid.

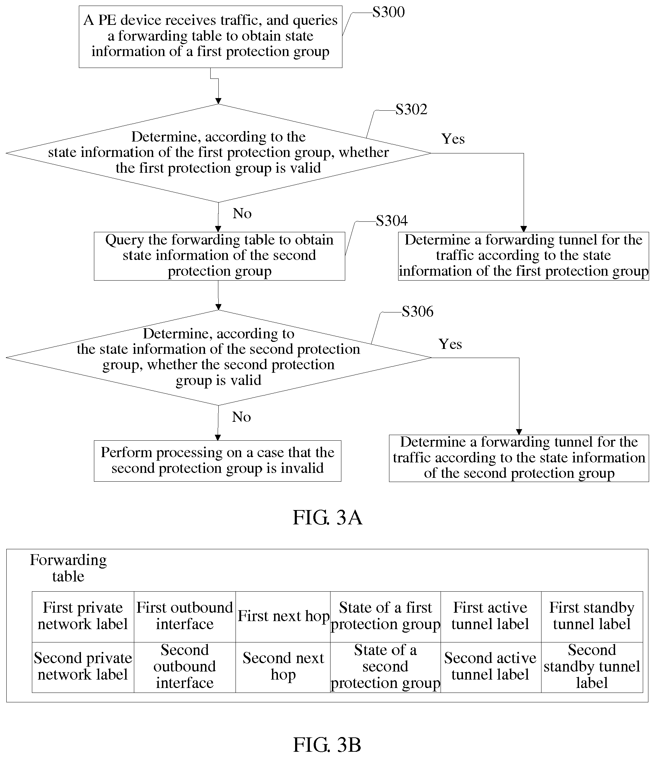

FIG. 3A is a schematic flowchart of another embodiment of a method for protecting service traffic according to the present invention. As shown in FIG. 3A, the method includes:
S300. A PE device receives traffic, and queries a forwarding table to obtain state information of a first protection group, where the state information of the first protection group includes connectivity information of a first active tunnel and a first standby tunnel.
S302. Determine, according to the state information of the first protection group, whether a state of the first protection group is valid; if the first protection group is valid, determine a forwarding tunnel for the traffic according to the state information of the first protection group, and end the procedure; and if the first protection group is invalid, select a second protection group to protect the traffic, and perform S304.

Optionally, when the first protection group is invalid, an alarm that the first protection group is invalid may further be reported as described in the foregoing embodiment.

S304. Query the forwarding table to obtain state information of the second protection group, where the state information of the second protection group includes connectivity information of a second active tunnel and a second standby tunnel.

Optionally, in this embodiment, the forwarding table includes at least a first forwarding entry and a second forwarding entry, where the first forwarding entry includes the state information of the first protection group, and the second forwarding entry includes the state information of the second protection group. Exemplarily, a part of content in the forwarding table is shown in FIG. 3B.

In this embodiment, the first protection group is an active protection group, and the second protection group is a standby protection group.

S306. Determine, according to the state information of the second protection group, whether the second protection group is valid; if the second protection group is valid, determine a forwarding tunnel for the traffic according to the state information of the second protection group, and end the procedure; and if the second protection group is invalid, perform processing on a case that the second protection group is invalid, for example, report a fault alarm of the second protection group, and/or select a third protection group to protect the traffic. In this case, the third protection group is a standby protection group for the second protection group.

In this embodiment, not only the state of the protection group can be perceived in time and a service interruption problem resulting from that service traffic is still sent to the protection group when the protection group is invalid is avoided, but also multiple protection groups are provided, and further the service traffic can be protected.

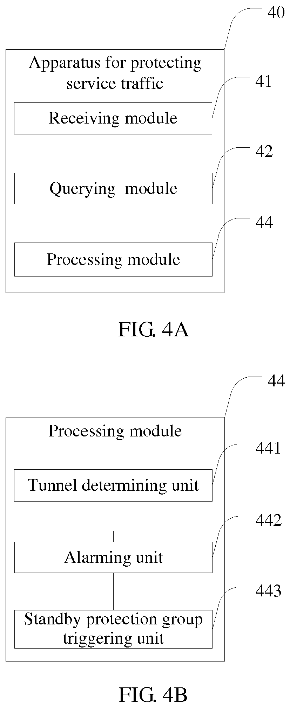

FIG. 4A is a schematic structural diagram of an embodiment of an apparatus for protecting service traffic according to the present invention. As shown in FIG. 4A, an apparatus 40 includes: a receiving module 41, a querying module 42, and a processing module 44.

The receiving module 41 is configured to receive traffic.

The querying module 42 is configured to query, after the receiving module 41 receives the traffic, a forwarding table to obtain state information of a protection group. The state information of the protection group includes connectivity information of an active tunnel and a standby tunnel.

Optionally, in an implementation manner of the embodiment of the present invention, the apparatus 40 for protecting service traffic may further include a storing module, configured to store the forwarding table. Further, optionally, the forwarding entry may further include one or more pieces of the following information: a private network label, an outbound interface, a next hop, an active tunnel label, and a standby tunnel label, in addition to the state information of the protection group. Exemplarily, a part of content in the forwarding table is shown in FIG. 1B.

The processing module 44 is configured to determine, according to the state information of the protection group, whether the protection group is valid; if the protection group is valid, determine a forwarding tunnel for the traffic according to the state information of the protection group; and if the protection group is invalid, perform processing on a case that the protection group is invalid.

Optionally, if both the connectivity information of the active tunnel and the connectivity information of the standby tunnel are displayed as disconnections, that is, if both the active tunnel and the standby tunnel are faulty, the processing module 44 determines that the protection group is invalid; otherwise, if at least one of the connectivity information of the active tunnel and the connectivity information of the standby tunnel is displayed as a connection, the processing module 44 determines that the protection group is valid.

For example, when both the active tunnel and the standby tunnel are connected, or when the active tunnel is connected but the standby tunnel is faulty, or when the active tunnel is faulty but the standby tunnel is connected, the processing module 44 may determine that the protection group is valid. In this case, the processing module 44 may determine, according to the state information of the protection group, that a tunnel in a connected state is a forwarding tunnel. When the active tunnel is connected but the standby tunnel is faulty, it is determined that the active tunnel is a forwarding tunnel for the traffic. When the standby tunnel is connected but the active tunnel is faulty, it is determined that the standby tunnel is a forwarding tunnel for the traffic. When both the active tunnel and the standby tunnel are connected, it is preferably determined that the active tunnel is a forwarding tunnel for the traffic.

When both the active tunnel and the standby tunnel are faulty, the processing module 44 may determine that the protection group is invalid.

Optionally, as shown in FIG. 4B, the processing module 44 may include:
a tunnel determining unit 441, configured to determine a forwarding tunnel for the traffic according to the state information of the protection group if the protection group is valid; and at least one of the following units:
   an alarming unit 442, configured to report an alarm that the protection group is invalid when the protection group is invalid; or report a fault alarm of the active tunnel when the active tunnel is faulty; or report a fault alarm of the standby tunnel when the standby tunnel is faulty; and
   a standby protection group triggering unit 443, configured to: when the protection group is invalid, trigger a standby protection group to protect the traffic.

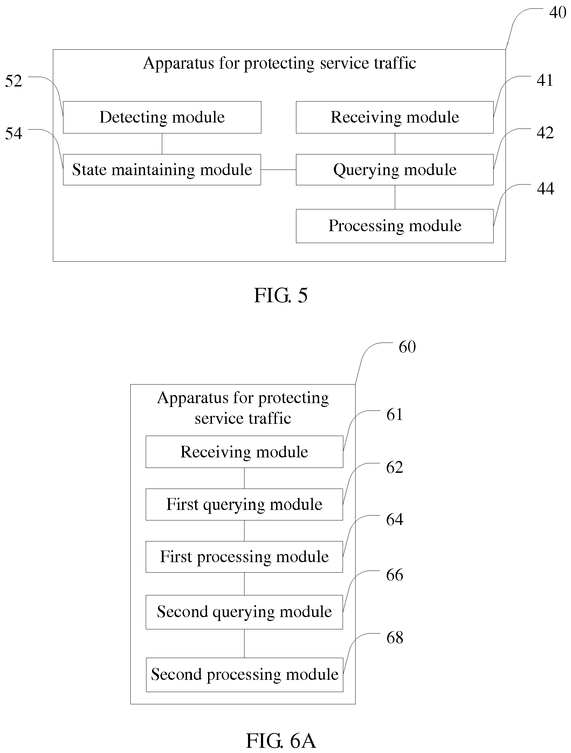

Optionally, referring to FIG. 5, the apparatus 40 for protecting service traffic may further include:
a detecting module 52, configured to detect connectivity of the active tunnel and the standby tunnel, for example, to detect the connectivity of the active tunnel and the standby tunnel by using an OAM or BFD technology; and
a state maintaining module 54, configured to maintain the state information of the protection group according to the detected connectivity information of the active tunnel and the standby tunnel.

In this embodiment, the detecting module 52 and the state maintaining module 54 may be configured to implement the method in the embodiment shown in FIG. 2, which is not described in detail herein.

The apparatus provided by this embodiment can perceive the state of the protection group in time, and avoids a service interruption problem resulting from that service traffic is still sent to the protection group when the protection group is invalid.

FIG. 6A is a schematic structural diagram of another embodiment of an apparatus for protecting service traffic according to the present invention. As shown in FIG. 6A, an apparatus 60 includes:
a receiving module 61, configured to receive traffic;
a first querying module 62, configured to query, after the receiving module 61 receives the traffic, a forwarding table to obtain state information of a first protection group, where the state information of the first protection group includes connectivity information of a first active tunnel and a first standby tunnel;
a first processing module 64, configured to determine, according to the state information of the first protection group, whether the first protection group is valid; if the first protection group is valid, determine a forwarding tunnel for the traffic according to the state information of the first protection group; and if the first protection group is invalid, trigger a second querying module 66;
the second querying module 66, configured to query the forwarding table to obtain state information of a second protection group, where the state information of the second protection group includes connectivity information of a second active tunnel and a second standby tunnel; and
a second processing module 68, configured to determine, according to the state information of the second protection group, whether the second protection group is valid; if the second protection group is valid, determine a forwarding tunnel for the traffic according to the state information of the second protection group; and if the second protection group is invalid, perform processing on a case that the second protection group is invalid.

Optionally, in an implementation manner of this embodiment, the apparatus 60 for protecting service traffic may further include a storing module, configured to store the forwarding table. Further, optionally, the forwarding table may include the state information of the second protection group in addition to the state information of the first protection group. Exemplarily, a part of content in the forwarding table is shown in FIG. 3B.

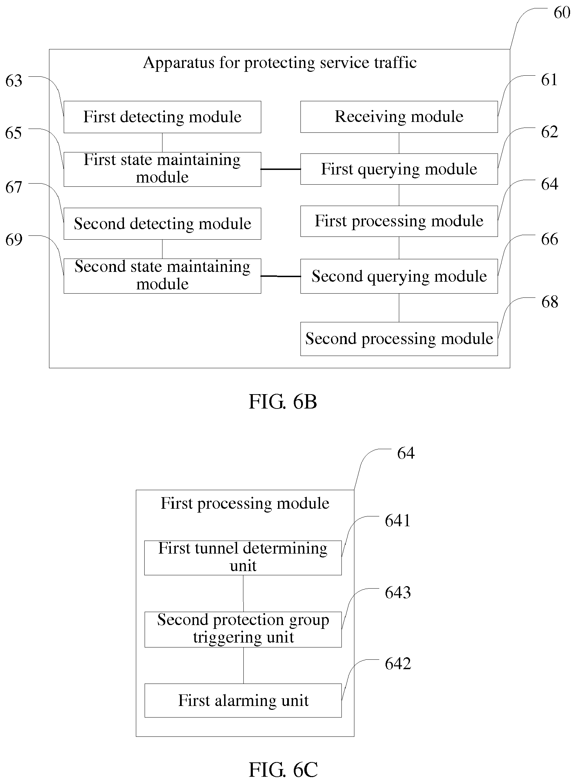

Optionally, as shown in FIG. 6B, in an implementation manner of this embodiment, the apparatus for protecting service traffic may further include:
a first detecting module 63, configured to detect connectivity of the first active tunnel and first standby tunnel, for example, an OAM or BFD technology is used for detection;
a first state maintaining module 65, configured to maintain a state of the first protection group according to the detected connectivity information of the first active tunnel and the first standby tunnel;
a second detecting module 67, configured to detect connectivity of the second active tunnel and the second standby tunnel, for example, the OAM or BFD technology is used for detection; and
a second state maintaining module 69, configured to maintain a state of the second protection group according to the detected connectivity information of the second active tunnel and the second standby tunnel.

Optionally, as shown in FIG. 6C, the first processing module 64 may include:
a first tunnel determining unit 641, configured to determine a forwarding tunnel for the traffic according to the state information of the first protection group when the first protection group is valid; and
a second protection group triggering unit 643, configured to trigger the second querying module 66 when the first protection group is invalid.

Further, optionally, the first processing module 64 may further include:
a first alarming unit 642, configured to report an alarm that the first protection group is invalid when the first protection group is invalid; or report a fault alarm of the first active tunnel when the first active tunnel is faulty; or report a fault alarm of the first standby tunnel when the first standby tunnel is faulty.

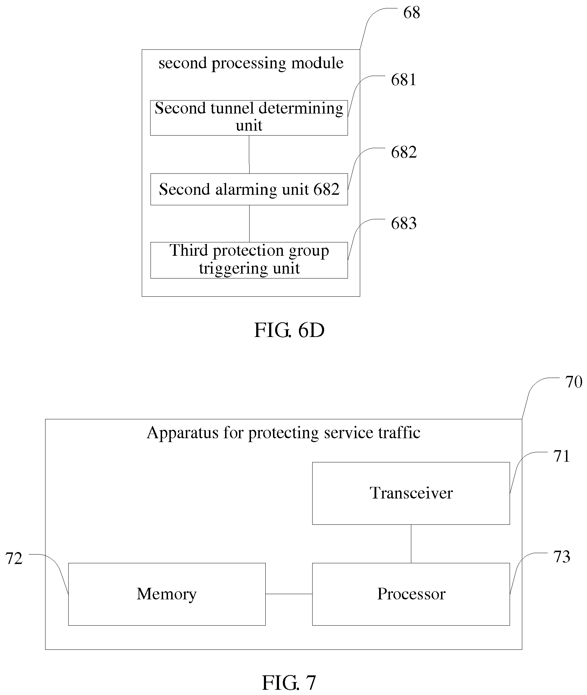

Optionally, as shown in FIG. 6D, the second processing module 68 may include:
a second tunnel determining unit 681, configured to determine a forwarding tunnel for the traffic according to the state information of the second protection group when the second protection group is valid; and further, at least one of the following units:
a second alarming unit 682, configured to report an alarm that the second protection group is invalid when the second protection group is invalid; or report a fault alarm of the second active tunnel when the second active tunnel is faulty; or report a fault alarm of the second standby tunnel when the second standby tunnel is faulty; and
a third protection group triggering unit 683, configured to: when the second protection group is invalid, trigger a third protection group to protect the traffic, where the third protection group is a standby protection group for the second protection group.

In this embodiment, not only the state of the protection group in time can be perceived and a service interruption problem resulting from that service traffic is still sent to the protection group when the protection group is invalid is avoided, but also multiple protection groups are provided and further the service traffic is protected.

FIG. 7 is a schematic structural diagram of another embodiment of an apparatus for protecting service traffic according to the present invention. Referring to FIG. 7, an apparatus 70 for protecting service traffic includes: a transceiver 71, a memory 72, and a processor 73.

The transceiver 71 is configured to receive and forward traffic.

The memory 72 is coupled with the processor 73, where the memory 72 stores various programs or applications, so that the processor 73 invokes the various programs or applications to implement corresponding functions. For example, the memory 72 may store state information of active and standby tunnels, a forwarding table, and a program for updating state information of a protection group in the forwarding table.

The processor 73 is configured to invoke a corresponding program in the memory 72 to update a state of the protection group in the forwarding table, and query the forwarding table to determine a forwarding tunnel for the traffic, or determine that the protection group is invalid, or report a tunnel fault alarm, and so on.

The protection group in the present invention may be a tunnel protection group using an MPLS APS or MPLS FRR technology; the present invention is applicable to active and standby tunnels regardless of whether the active and standby tunnels are dynamic tunnels or static tunnels; various method and apparatus embodiments in the present invention are not only applicable to a BGP/MPLS L3VPN network, but also applicable to a hierarchy of VPN (full English name: Hierarchy of VPN, HoVPN for short) network.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

Exemplary embodiments of the present invention have been disclosed, but the protection scope of the present invention is surely not limited thereto. Equivalent modifications and variations made according to the claims of the present invention shall fall within the scope of the present invention.

## Claims

1. A method for protecting service traffic, wherein the method is used for a Border Gateway Protocol, BOP, or Multi-Protocol Label Switching, MPLS, Layer 3 Virtual Private Network, L3VPN, network or a Hierarchy of VPN, HoVPN, network, comprising:
receiving (S100, S300), by a provider edge router, PE, traffic, and querying a forwarding table to obtain state information of a first protection group, wherein the state information of the first protection group comprises connectivity information of a first active tunnel and connectivity information of a first standby tunnel;
determining (S102), according to the state information of the first protection group, whether the first protection group is valid; and
if the first protection group is valid, determining a forwarding tunnel for the traffic according to the state information of the first protection group; and if the first protection group is invalid, performing invalidation processing on the first protection group.

2. The method according to claim 1, wherein the performing invalidation processing on the first protection group comprises: reporting an alarm that the first protection group is invalid, and/or selecting a second protection group to protect the traffic.

3. The method according to claim 2, wherein the selecting a second protection group to protect the traffic comprises:
querying the forwarding table to obtain state information of the second protection group, wherein the state information of the second protection group comprises connectivity information or a second active tunnel and connectivity information of a second standby tunnel; and
determining, according to the state information of the second protection group, whether the second protection group is valid; if the second protection group is valid, determining a Forwarding tunnel for the traffic according to the state information of the second protection group; and if the second protection group is invalid, performing invalidation processing on the second protection group.

4. The method according to claim 3, wherein the performing invalidation processing on the second protection group comprises: reporting an alarm that the second protection group is invalid, and/or selecting a third protection group to protect the traffic.

5. The method according to claim 3, wherein the connectivity information of the second active tunnel and connectivity information of the second standby tunnel is obtained in the following manner:
detecting connectivity of the second active tunnel by using an operation, administration and maintenance, OAM, technology or a bidirectional forwarding detection, BFD, technology;
if the second active tunnel is connected, saving the connectivity information of the second active tunnel in a state machine, and setting, according to the connectivity information of the second active tunnel saved in the state machine, the state information of the second protection group in the forwarding table to that the second active tunnel is connected;
if the second active tunnel is not connected, saving the connectivity information of the second active tunnel in the state machine, and detecting connectivity of the second standby tunnel by using the OAM or BFD technology;
if the second standby tunnel is connected, saving the connectivity information of the second standby tunnel in the state machine, and setting, according to the connectivity information of the second active tunnel and the connectivity information of the second standby tunnel saved in the state machine, the state information of the second protection group in the forwarding table to that the second active tunnel is not connected and the second standby tunnel is connected; and
if the second standby tunnel is not connected, saving the connectivity information of the second standby tunnel in the state machine, and setting, according to the connectivity information of the second active tunnel and the connectivity information of the second standby tunnel saved in the state machine, the state information of the second protection group in the forwarding table to that the second active tunnel is not connected and the second standby tunnel is not connected.

6. The method according to any one of claims 1 to 5, wherein the connectivity information of the first active tunnel and connectivity information of the first standby tunnel is obtained in the following manner:
detecting connectivity of the first active tunnel by using the OAM technology or BFD technology;
if the first active tunnel is connected, saving the connectivity information of the first active tunnel in the state machine, and setting, according to the connectivity information of the first active tunnel saved in the state machine, the state information of the first protection group in the forwarding table to that the first active tunnel is connected;
if the first active tunnel is not connected, saving the connectivity information of the first active tunnel in the state machine, and detecting connectivity of the first standby tunnel by using the OAM or BFD technology;
if the first standby tunnel is connected, saving the connectivity information of the first standby tunnel in the state machine, and setting, according to the connectivity information of the first active tunnel and the connectivity information of the first standby tunnel saved in the state machine, the state information of the first protection group in the forwarding table to that the first active tunnel is not connected and the first standby tunnel is connected; and
if the first standby tunnel is not connected, saving the connectivity information of the first standby tunnel in the state machine, and setting, according to the connectivity information of the first active tunnel and the connectivity information of the first standby tunnel saved in the state machine, the state information of the first protection group in the forwarding table to that the first active tunnel is not connected and the first standby tunnel is not connected.

7. An apparatus (40) for protecting service traffic, wherein the apparatus is used for a Border Gateway Protocol, BGP, or Multi-Protocol Label Switching, MPLS, Layer 3 Virtual Private Network, L3VPN, network or a Hierarchy of VPN, HoVPN, network, comprising:
a receiving module (41), configured to receive traffic;
a first querying module (62), configured to query, after the receiving module receives the traffic, a forwarding table to obtain state information of a first protection group, wherein the state informations of the first protection group comprises connectivity information of a first active tunnel and connectivity information of a first standby tunnel; and
a first processing module (64), configured to determine, according to the state information of the first protection group, whether the first protection group is valid; if the first protection group is valid, determine a forwarding tunnel for the traffic according to the state information of the first protection group; and if the first protection group is invalid, performing invalidation processing on the first protection group.

8. The apparatus (40) according to claim 7, wherein the first processing module (64) comprises:
a first tunnel determining unit (641), configured to determine a forwarding tunnel for the traffic according to the state information of the first protection group when the first protection group is valid.

9. The apparatus (40) according to claim 8, wherein the first processing module (64) further comprises:
a first alarming unit (642), configured to report an alarm that the first protection group is invalid when the first protection group is invalid; or report a fault alarm of the first active tunnel when the first active tunnel is faulty; or report a fault alarm of the first standby tunnel when the first standby tunnel is faulty.

10. The apparatus according to claim 8 or 9, wherein the first processing module (64) further comprises a second protection group triggering unit (643), configured to trigger a second querying module when the first protection group is invalid.

11. The apparatus (40) according to claim 10, further comprising the second querying module (66) and a second processing module (68), wherein:
the second querying module (66) is configured to query the forwarding table to obtain state information of a second protection group, wherein the state information of the second protection group comprises connectivity information of a second active tunnel and connectivity information of a second standby tunnel; and
the second processing module (68) is configured to determine, according to the state information of the second protection group, whether the second protection group is valid; if the second protection group is valid, determine a forwarding tunnel for the traffic according to the state information of the second protection group; and if the second protection group is invalid, performing invalidation processing on the second protection group.

12. The apparatus (40) according to claim 11, wherein the second processing module (68) comprises.
a second tunnel determining unit, configured to determine a forwarding tunnel for the traffic according to the state information of the second protection group when the second protection group is valid.

13. The apparatus (40) according to claim 12, wherein the second processing module (68) further comprises:
a second alarming unit (682), configured to report an alarm that the second protection group is invalid when the second protection group is invalid; or report a fault alarm of the second active tunnel when the second active tunnel is faulty; or report a fault alarm of the second standby tunnel when the second standby tunnel is faulty.

14. The apparatus (40) according to claim 12 or 13, wherein the second processing module (68) further comprises a third protection group triggering unit (683), configured to: when the second protection group is invalid, trigger a third protection group to protect the traffic.

15. The apparatus (40) according to any one of claims 7 to 14, further comprising:
a first detecting module (63), configured to detect connectivity of the first active tunnel and first standby tunnel; and
a first state maintaining module (65), configured to maintain a state of the first protection group according to the detected connectivity information of the first active tunnel and connectivity information of the first standby tunnel.

16. The apparatus (40) according to any one of claims 11 to 14, further comprising:
a second detecting module (67), configured to detect connectivity the second active tunnel and second standby tunnel; and
a second state maintaining module (69), configured to maintain a state of the second protection group according to the detected connectivity information of the second active tunnel and connectivity information of the second standby tunnel.

17. An apparatus (70) for protecting service traffic, wherein the apparatus is used for a Border Gateway Protocol, BGP, or Multi-Protocol Label Switching, MPLS, Layer 3 Virtual Private Network, L3VPN network or a Hierarchy of VPN, HoVPN, network, comprising: a transceiver (71), a memory (72) and a processor (73), wherein
the transceiver(71) is configured to receive and forward traffic;
the memory (72) is coupled with the processor (73), where the memory (72) stores at least one of a program and an application;
the processor (73) is configured to invoke the at least one of a program and an application to perform a method according to claim 1 for protecting service traffic.

## Patentansprüche

1. Verfahren zum Schützen von Dienstverkehr, wobei das Verfahren für ein Netzwerk gemäß "Border Gateway" Protokoll, BGP, oder "Multi-Protocol Label Switching", MPLS, "Layer 3 Virtual Private Network", L3VPN, oder ein Netzwerk gemäß "Hierarchy of VPN", HoVPN, verwendet wird, umfassend:
Empfangen (S100, S300) von Verkehr durch einen "Provider-Edge"-Router, PE, und Abfragen einer Weiterleitungstabelle, um Zustandsinformationen einer ersten Schutzgruppe zu erhalten, wobei die Zustandsinformationen der ersten Schutzgruppe Konnektivitätsinformationen eines ersten aktiven Tunnels und Konnektivitätsinformationen eines ersten Standby-Tunnels aufweisen,
Bestimmen (S102) entsprechend den Zustandsinformationen der ersten Schutzgruppe, ob die erste Schutzgruppe in Kraft ist, und
Bestimmen eines Weiterleitungstunnels für den Verkehr gemäß den Zustandsinformationen der ersten Schutzgruppe, wenn die erste Schutzgruppe in Kraft ist, und Ausführen eines Außerkraftsetzungsvorgangs an der ersten Schutzgruppe, wenn die erste Schutzgruppe außer Kraft ist.

2. Verfahren nach Anspruch 1, wobei das Ausführen des Außerkraftsetzungsvorgangs an der ersten Schutzgruppe umfasst: Melden eines Alarms, dass die erste Schutzgruppe außer Kraft ist und/oder Auswählen einer zweiten Schutzgruppe zum Schützen des Verkehrs.

3. Verfahren nach Anspruch 2, wobei das Auswählen einer zweiten Schutzgruppe zum Schützen des Verkehrs umfasst:
Abfragen der Weiterleitungstabelle, um Zustandsinformationen der zweiten Schutzgruppe zu erhalten, wobei die Zustandsinformationen der zweiten Schutzgruppe Konnektivitätsinformationen eines zweiten aktiven Tunnels und Konnektivitätsinformationen eines zweiten Standby-Tunnels aufweisen, und
Bestimmen entsprechend den Zustandsinformationen der zweiten Schutzgruppe, ob die zweite Schutzgruppe in Kraft ist, Bestimmen eines Weiterleitungstunnels für den Verkehr gemäß den Zustandsinformationen der zweiten Schutzgruppe, wenn die zweite Schutzgruppe in Kraft ist, und Ausführen eines Außerkraftsetzungsvorgangs an der zweiten Schutzgruppe, wenn die zweite Schutzgruppe außer Kraft ist.

4. Verfahren nach Anspruch 3, wobei das Ausführen des Außerkraftsetzungsvorgangs an der zweiten Schutzgruppe umfasst: Melden eines Alarms, dass die zweite Schutzgruppe außer Kraft gesetzt ist und/oder Auswählen einer dritten Schutzgruppe zum Schützen des Verkehrs.

5. Verfahren nach Anspruch 3, wobei die Konnektivitätsinformationen des zweiten aktiven Tunnels und die Konnektivitätsinformationen des zweiten Standby-Tunnels auf die folgende Weise erhalten werden:
Ermitteln der Konnektivität des zweiten aktiven Tunnels unter Verwendung einer Operations-, Administrations- und Wartungstechnologie, OAM-Technologie, oder einer bidirektionalen Weiterleitungsermittlungstechnologie, BFD-Technologie,
wenn der zweite aktive Tunnel angeschlossen ist, Speichern der Konnektivitätsinformationen des zweiten aktiven Tunnels in einer Zustandsmaschine und gemäß den Kannektivitätsinformationen des zweiten aktiven Tunnels, die in der Zustandsmaschine gespeichert sind, Einsetzen der Zustandsinformationen der zweiten Schutzgruppe in die Weiterleitungstabelle, an welche der zweite aktive Tunnel angeschlossen ist,
wenn der zweite aktive Tunnel nicht angeschlossen ist, Speichern der Konnektivitätsinformationen des zweiten aktiven Tunnels in der Zustandsmaschine und Ermitteln der Konnektivität des zweiten Standby-Tunnels unter Verwendung der OAM- oder BFD-Technologie,
wenn der zweite Standby-Tunnel angeschlossen ist, Speichern der Konnektivitätsinformationen des zweiten Standby-Tunnels in der Zustandsmaschine und gemäß den Konnektivitätsinformationen des zweiten aktiven Tunnels und den Konnektivitätsinformationen des zweiten Standby-Tunnels, die in der Zustandsmaschine gespeichert sind, Einsetzen der Zustandsinformationen der zweiten Schutzgruppe in die Weiterleitungstabelle, an welche der zweite aktive Tunnel nicht angeschlossen ist und der zweite Standby-Tunnel angeschlossen ist, und
wenn der zweite Standby-Tunnel nicht angeschlossen ist, Speichern der Konnektivitätsinformationen des zweiten Standhy-Tunnels in der Zustandsmaschine und gemäß den Konnektivitätsinformationen des zweiten aktiven Tunnels und den Konnektivitätsinformationen des zweiten Standby-Tunnels, die in der Zustandsmaschine gespeichert sind, Einsetzen der Zustandsinformationen der zweiten Schutzgruppe in die Weiterleitungstabelle, an welche der zweite aktive Tunnel nicht angeschlossen ist und der zweite Standby-Tunnel nicht angeschlossen ist.

6. Verfahren nach einem der Ansprüche 1 bis 5, wobei die Konnektivitätsinformationen des ersten aktiven Tunnels und die Konnektivitätsinformationen des ersten Standby-Tunnels auf die folgende Weise erhalten werden:
Ermitteln der Konnektivität des ersten aktiven Tunnels unter Verwendung der OAM-Technologie oder der BFD-Technologie,
wenn der erste aktive Tunnel abgeschlossen ist, Speichern der Konnektivitätsinformationen des ersten aktiven Tunnels in der Zustandsmaschine und gemäß den Konnektivitätsinformationen des ersten aktiven Tunnels, die in der Zustandsmaschine gespeichert sind, Einsetzen der Zustandsinformationen der ersten Schutzgruppe in die Weiterleitungstabelle, an welche der erste aktive Tunnel angeschlossen ist,
wenn der erste aktive Tunnel nicht angeschlossen ist, Speichern der Konnektivitätsinformationen des ersten aktiven Tunnels in der Zustandsmaschine und Ermitteln der Konnektivität des ersten Standby-Tunnels unter Verwendung der OAM- oder BFD-Technologie,
wenn der erste Standby-Tunnel angeschlossen ist, Speichern der Konnektivitätsinformationen des ersten Standby-Tunnels in der Zustandsmaschine und gemäß den Konnektivitätsinformationen des ersten aktiven Tunnels und den Konnektivitätsinformationen des ersten Standby-Tunnels, die in der Zustandsmaschine gespeichert sind, Einsetzen der Zustandsinformationen der ersten Schutzgruppe in die Weiterleitungstabelle, an welche der erste aktive Tunnel nicht angeschlossen ist und der erste Standby-Tunnel angeschlossen ist, und
wenn der erste Standby-Tunnel nicht angeschlossen ist, Speichern der Konnektivitätsinformationen des ersten Standby-Tunnels in der Zustandsmaschine und gemäß den Konnektivitätsinformationen des ersten aktiven Tunnels und den Konnektivitätsinformationen des ersten Standby-Tunnels, die in der Zustandsmaschine gespeichert sind, Einsetzen der Zustandsinformationen der ersten Schutzgruppe in die Weiterleitungstabelle, an welche der erste aktive Tunnel nicht angeschlossen ist und der erste Standby-Tunnel nicht angeschlossen ist.

7. Vorrichtung (40) zum Schützen von Dienstverkehr, wobei die Vorrichtung verwendet wird für ein Netzwerk gemäß "Border Gateway" Protokoll, BGP, oder "Multi-Protocol Label Switching", MPLS, "Layer 3 Virtual Private Network", L3VPN, oder ein Netzwerk gemäß "Hierarchy of VPN", HoVPN, mit:
einem Empfangsmodul (41), das für den Empfang von Verkehr eingerichtet ist, einem ersten Abfragemodul (62), das nach dem Empfang des Verkehrs durch das Empfangsmodul zum Abfragen einer Weiterleitungstabelle eingerichtet ist, um Zustandsinformationen einer ersten Schutzgruppe zu erhalten, wobei die Zustandsinformationen der ersten Schutzgruppe Konnektivitätsinformationen eines ersten aktiven Tunnels und Konnektivitätsinformationen eines ersten Standby-Tunnels aufweisen, und
einem ersten Verarbeitungsmodul (64), das eingerichtet ist, gemäß den Zustandsinformationen der ersten Schutzgruppe zu bestimmen, ob die erste Schutzgruppe in Kraft ist, und einen Weiterleitungstunnel für den Verkehr gemäß den Zustandsinformationen der ersten Schutzgruppe zu bestimmen, wenn die erste Schutzgruppe in Kraft ist, und einen Außerkraftsetzungsvorgang an der ersten Schutzgruppe auszuführen, wenn die erste Schutzgruppe außer Kraft ist.

8. Vorrichtung (40) nach Anspruch 7, wobei das erste Verarbeitungsmodul (64) aufweist:
eine erste Tunnelbestimmungseinheit (641), die eingerichtet ist zum Bestimmen eines Weiterleitungstunnels für den Verkehr gemäß den Zustandsinformationen der ersten Schutzgruppe, wenn die erste Schutzgruppe in Kraft ist.

9. Vorrichtung (40) nach Anspruch 8, wobei das erste Verarbeitungsmodul (64) ferner aufweist:
eine erste Alarmeinheit (642), die eingerichtet ist zum Melden eines Alarms, dass die erste Schutzgruppe außer Kraft ist, wenn die erste Schutzgruppe außer Kraft ist, oder zum Melden eines Störalarms des ersten aktiven Tunnels, wenn der erste aktive Tunnel gestört ist, oder zum Melden eines Störalarms des ersten Standby-Tunnels, wenn der erste Standby-Tunnel gestört ist.

10. Vorrichtung nach Anspruch 8 oder 9, wobei das erste Verarbeitungsmodul (64) ferner eine zweite Schutzgruppen-Ansteuerungseinheit (643) aufweist, die eingerichtet ist, ein zweites Abfragemodul anzusteuern, wenn die erste Schutzgruppe außer Kraft ist.

11. Vorrichtung (40) nach Anspruch 10, ferner das zweite Abfragemodul (66) und ein zweites Verarbeitungsmodul (68) aufweisend, wobei:
das zweite Abfragemodul (66) eingerichtet ist, die Weiterleitungstabelle abzufragen, um Zustandsinformationen einer zweiten Schutzgruppe zu erhalten, wobei die Zustandsinformationen der zweiten Schutzgruppe Kannektivitätsinformationen eines zweiten aktiven Tunnels und Konnektivitätsinformationen eines zweiten Standby-Tunnels aufweisen, und
das zweite Verarbeitungsmodul (68) eingerichtet ist, gemäß den Zustandsinformationen der zweiten Schutzgruppe zu bestimmen, ob die zweite Schutzgruppe in Kraft ist, einen Weiterleitungstunnel für den Verkehr gemäß den Zustandsinformationen der zweiten Schutzgruppe zu bestimmen, wenn die zweite Schutzgruppe in Kraft ist, und einen Außerkraftsetzungsvorgang an der zweiten Schutzgruppe auszuführen, wenn die zweite Schutzgruppe außer Kraft ist.

12. Vorrichtung (40) nach Anspruch 11, wobei das zweite Verarbeitungsmodul (68) aufweist:
eine zweite Tunnelbestimmungseinheit, die eingerichtet ist, einen Weiterleitungstunnel für den Verkehr gemäß den Zustandsinformationen der zweiten Schutzgruppe zu bestimmen, wenn die zweite Schutzgruppe in Kraft ist.

13. Vorrichtung (40) nach Anspruch 12, wobei das zweite Verarbeitungsmodul (68) ferner aufweist:
eine zweite Alarmeinheit (682), die eingerichtet ist zum Melden eines Alarms, dass die zweite Schutzgruppe außer Kraft ist, wenn die zweite Schutzgruppe außer Kraft ist, oder zum Melden eines Störalarms des zweiten aktiven Tunnels, wenn der zweite aktive Tunnel gestört ist, oder zum Melden eines Störalarms des zweiten Standby-Tunnels, wenn der zweite Standby-Tunnel gestört ist.

14. Vorrichtung (40) nach Anspruch 12 oder 13, wobei das zweite Verarbeitungsmodul (68) ferner eine dritte Schutzgruppen-Ansteuerungseinheit (683) aufweist, die eingerichtet ist, eine dritte Schutzgruppe zum Schutz des Verkehrs anzusteuern, wenn die zweite Schutzgruppe außer Kraft ist.

15. Vorrichtung (40) nach einem der Ansprüche 7 bis 14, ferner aufweisend:
ein erstes Ermittlungsmodul (63), das zum Ermitteln der Konnektivität des ersten aktiven Tunnels und des ersten Standby-Tunnels eingerichtet ist, und
ein erstes Zustandsbeibehaltungsmodul (65), das eingerichtet ist, einen Zustand der ersten Schutzgruppe gemäß den ermittelten Konnektivitätsinformationen des ersten aktiven Tunnels und Konnektivitätsinformationen des ersten Standby-Tunnels beizubehalten.

16. Vorrichtung (40) nach einem der Ansprüche 11 bis 14, ferner aufweisend:
ein zweites Ermittlungsmodul (67), das zum Ermitteln der Konnektivität des zweiten aktiven Tunnels und des zweiten Standby-Tunnels eingerichtet ist, und
ein zweites Zustandsbeibehaltungsmodul (69), das eingerichtet ist, einen Zustand der zweiten Schutzgruppe gemäß den ermittelten Konnektivitätsinformationen des zweiten aktiven Tunnels und Konnektivitätsinformationen des zweiten Standby-Tunnels beizubehalten.

17. Vorrichtung (70) zum Schützen von Dienstverkehr, wobei die Vorrichtung verwendet wird für ein Netzwerk gemäß "Border Gateway" Protokoll, BGP, oder "Multi-Protocol Label Switching", MPLS, "Layer 3 Virtual Private Network", L3VPN, oder ein Netzwerk gemäß "Hierarchy of VPN", HoVPN, mit einem Sendeempfänger (71), einem Speicher (72) und einem Prozessor (73), wobei
der Sendeempfänger (71) eingerichtet ist, Verkehr zu empfangen und weiterzuleiten, der Speicher (72) mit dem Prozessor (73) verbunden ist, wobei der Speicher (72) mindestens eines von einem Programm und einer Anwendung speichert,
der Prozessor (73) eingerichtet ist, das mindestens eine von einem Programm und einer Anwendung aufzurufen, um ein Verfahren gemäß Anspruch 1 zum Schutz von Dienstverkehr auszuführen.

## Revendications

1. Procédé de protection d'un trafic de service, dans lequel le procédé est utilisé pour un réseau de type Réseau Virtuel Privé de Couche 3, L3VPN (Layer 3 Virtual Private Network) à Protocole de Passerelle de Frontière, BGP (Border Gateway Protocol), ou à Commutation d'Etiquettes Multi-Protocole, MPLS (Multi-Protocol Label Switching) ou un réseau à Hiérarchie de VPN, HoVPN, (Hierarchy of VPN), comprenant :
la réception (S100, S300), par un routeur de frontière de fournisseur, PE, (Provider Edge), d'un trafic et l'interrogation d'une table de réacheminement afin d'obtenir des informations d'état d'un premier groupe de protection, dans lequel les informations d'état du premier groupe de protection comprennent des informations de connectivité d'un premier tunnel actif et des informations de connectivité d'un premier tunnel d'attente ;
la détermination (S102), conformément aux informations d'état du premier groupe de protection, du fait de savoir si le premier groupe de protection est valide ; et
si le premier groupe de protection est valide, la détermination d'un tunnel de réacheminement pour le trafic conformément aux informations d'état du premier groupe de protection ; et, si le premier groupe de protection est invalide, l'exécution d'un traitement d'invalidation sur le premier groupe de protection.

2. Procédé selon la revendication 1, dans lequel l'exécution du traitement d'invalidation sur le premier groupe de protection comprend : le signalement d'une alarme selon laquelle le premier groupe de protection est invalide, et/ou la sélection d'un deuxième groupe de protection afin de protéger le trafic.

3. Procédé selon la revendication 2, dans lequel l'exécution d'un deuxième groupe de protection afin de protéger le trafic comprend ;
l'interrogation de la table de réacheminement afin d'obtenir des informations d'état du deuxième groupe de protection, dans lequel les informations d'état du deuxième groupe de protection comprennent des informations de connectivité d'un deuxième tunnel actif et des informations de connectivité d'un deuxième tunnel d'attente ; et
la détermination, conformément aux informations d'état du deuxième groupe de protection, du fait de savoir si le deuxième groupe de protection est valide ; si le deuxième groupe de protection est valide, la détermination d'un tunnel de réacheminememt pour le trafic conformément aux informations d'état du deuxième groupe de protection ; et, si le deuxième groupe de protection est invalide, l'exécution d'un traitement d'invalidation sur le deuxième groupe de protection.

4. Procédé selon la revendication 3, dans lequel l'exécution du traitement d'invalidation sur le deuxième groupe de protection comprend : le signalement d'une alarme selon laquelle le deuxième groupe de protection est invalide, et/ou la sélection d'un troisième groupe de protection afin de protéger le trafic.

5. Procédé selon la revendication 3, dans lequel les informations de connectivité du deuxième tunnel actif et les informations de connectivité du deuxième tunnel d'attente sont obtenues de la manière suivante :
détection de la connectivité du deuxième tunnel actif par utilisation d'une technologie d'Opérations, d'Administration et de Maintenance, OAM (Operation, Administration and Maintenance) ou d'une technologie de Détection de Réacheminement Bidirectionnel, BFD (Bidirectional Forwarding Detection);
si le deuxième tunnel actif est connecté, la sauvegarde des informations de connectivité du deuxième tunnel actif dans un automate fini et le réglage, conformément aux informations de connectivité du deuxième tunnel actif sauvegardé dans l'automate fini, des informations d'état du deuxième groupe de protection dans la table de réacheminement de manière à ce que le deuxième tunnel actif soit connecté ;
si le deuxième tunnel actif n'est pas connecté, la sauvegarde des informations de connectivité du deuxième tunnel actif dans l'automate fini, et la détection de la connectivité du deuxième tunnel d'attente par utilisation de la technologie OAM ou BFD ;
si le deuxième tunnel actif est connecté, la sauvegarde des informations de connectivité du deuxième tunnel d'attente dans l'automate fini et le réglage, conformément aux informations de connectivité du deuxième tunnel actif et aux informations de connectivité du deuxième tunnel d'attente sauvegardées dans l'automate finie, des informations d'état du deuxième groupe de protection dans la table de réacheminement de manière à ce que le deuxième tunnel actif ne soit pas connecté et que le deuxième tunnel d'attente soit connecté ; et
si le deuxième tunnel d'attente n'est pas connecté, la sauvegarde des informations de connectivité du deuxième tunnel d'attente dans l'automate fini et le réglage, conformément aux informations de connectivité du deuxième tunnel actif et aux informations de connectivité du deuxième tunnel d'attente sauvegardées dans l'automate fini, des informations d'état du deuxième groupe de protection dans la table de réacheminement à celles qui font en sorte que le deuxième tunnel actif ne soit pas connecté et que le deuxième tunnel d'attente ne soit pas connecté.

6. Procédé selon l'une quelconque des revendications 1 à 5, dans lequel les informations de connectivité du premier tunnel actif et les informations de connectivité du premier tunnel d'attente sont obtenues de la manière suivante :
détection de la connectivité du premier tunnel actif par utilisation de la technologie OAM ou de la technologie BFD ;
si le premier tunnel actif est connecté, la sauvegarde des informations de connectivité du premier tunnel actif dans l'automate fini, et le réglage, conformément aux informations de connectivité du premier tunnel actif sauvegardées dans l'automate fini, des informations d'état du premier groupe de protection dans la table de réacheminement de manière à ce que le premier tunnel actif soit connecté ;
si le premier tunnel actif n'est pas connecté, la sauvegarde des informations de connectivité du premier tunnel actif dans l'automate fini, et la détection de la connectivité du premier tunnel d'attente par utilisation de la technologie OAM ou BFD ;
si le premier tunnel d'attente est connecté, la sauvegarde des informations de connectivité du premier tunnel d'attente dans l'automate fini et le réglage, conformément aux informations de connectivité du premier tunnel actif et aux informations de connectivité du premier tunnel d'attente sauvegardées dans l'automate fini, des informations d'état du premier groupe de protection dans la table de réacheminement de manière à ce que le premier tunnel actif ne soit pas connecté et que le premier tunnel d'attente soit connecté ; et
si le premier tunnel d'attente n'est pas connecté, la sauvegarde des informations de connectivité du premier tunnel d'attente dans l'automate fini, et le réglage, conformément aux informations de connectivité du premier tunnel actif et aux informations de connectivité du premier tunnel d'attente sauvegardées dans l'automate fini, des informations d'état du premier groupe de protection dans la table de réacheminement de manière à ce que le premier tunnel actif ne soit pas connecté et que le premier tunnel d'attente ne soit pas connecté.

7. Appareil (40) destiné à protéger un trafic de service, dans lequel l'appareil est utilisé pour un réseau de type Réseau Virtuel Privé de Couche 3, L3VPN, à Protocole de Passerelle de Frontière, BGP, ou à Commutation d'Etiquettes Multi-Protocole, MPLS, ou un réseau à Hiérarchie de VPN, HoVPN, comprenait :
un module de réception (41), configuré pour recevoir du trafic ;
un premier module d'interrogation (62) configuré pour interroger, après que le module de réception a reçu le trafic, une table de réacheminement afin d'obtenir des informations d'état d'un premier groupe de protection, dans lequel les informations d'état du premier groupe de protection comprennent des informations de connectivité d'un premier tunnel actif et des informations de connectivité d'un premier tunnel d'attente ; et
un premier module de traitement (64), configuré pour déterminer, conformément aux informations d'état du premier groupe de protection, si le premier groupe de protection est validé ; si le premier groupe de protection est valide, déterminer un tunnel de réacheminement pour le trafic conformément aux informations d'état du premier groupe de protection ; et si le premier groupe de protection est invalide, exécuter un traitement d'invalidation sur le premier groupe de protection.

8. Appareil (40) selon la revendication 7, dans lequel le premier module de traitement (64), comprend :
une première unité de détermination de tunnel (641), configurée pour déterminer un tunnel de réacheminement pour le trafic conformément aux informations d'état du premier groupe de protection lorsque le premier groupe de protection est valide.

9. Appareil (40) selon la revendication 8, dans lequel le premier module de traitement (64) comprend en outre :
une première unité d'alarme (642), configurée pour signaler une alarme selon laquelle le premier groupe de protection est invalide lorsque le premier groupe de protection est invalide ; ou signaler une alarme de défaut du premier tunnel actif lorsque le premier tunnel actif est défectueux ; ou signaler une alarme de défaut du premier tunnel d'attente lorsque le premier tunnel d'attente est défectueux.

10. Appareil selon la revendication 8 ou 9, dans lequel le premier module de traitement (64) comprend en outre une deuxième unité de déclenchement de groupe (643), configurée pour déclencher un deuxième module d'interrogation lorsque le premier groupe de protection est invalide.

11. Appareil (40) selon la revendication 10, comprenant en outre le deuxième module d'interrogation (66) et un deuxième module de traitement (68), dans lequel :
le deuxième module d'interrogation (66) est configuré pour interroger la table de réacheminement afin d'obtenir des informations d'état d'un deuxième groupe de protection, dans lequel les informations d'état du deuxième groupe de protection comprennent des informations de connectivité d'un deuxième tunnel actif et des informations de connectivité d'un deuxième tunnel d'attente ; et
le deuxième module de traitement (68) est configuré pour déterminer, conformément aux informations d'état du deuxième groupe de protection, si le deuxième groupe de protection est valide ; si le deuxième groupe de protection est valide, déterminer un tunnel de réacheminement pour le trafic conformément aux informations d'état du deuxième groupe de protection ; et si le deuxième groupe de protection est invalide, exécuter un traitement d'invalidation sur le deuxième groupe de protection.

12. Appareil (40) selon la revendication 11, dans lequel le deuxième module de traitement (68) comprend :
une deuxième unité de détermination de tunnel, configurée pour déterminer un tunnel de réacheminement pour le trafic conformément aux informations d'état du deuxième groupe de protection lorsque le deuxième groupe de protection est valide.

13. Appareil (40) selon la revendication 12, dans lequel le deuxième module de traitement (68) comprend en outre :
une deuxième unité d'alarme (682), configurée pour signaler une alarme selon laquelle le deuxième groupe de protection est invalide lorsque le deuxième groupe de protection est invalide ; ou signaler une alarme de défaut du deuxième tunnel actif lorsque le deuxième tunnel actif est défectueux ; ou signaler une alarme de défaut du deuxième tunnel d'attente lorsque le deuxième tunnel d'attente est défectueux.

14. Appareil (40) selon la revendication 12 ou 13, dans lequel le deuxième module de traitement (68) comprend en outre une troisième unité de déclenchement de groupe de protection (683), configurée pour : lorsque le deuxième groupe de protection est invalide, déclencher un troisième groupe de protection afin de protéger le trafic.

15. Appareil (40) selon l'une quelconque des revendications 7 à 14, comprenant en outre :
un premier module de détection (63), configuré pour détecter une connectivité du premier tunnel actif et du premier tunnel d'attente ; et
un premier module de maintien d'état (65), configuré pour maintenir un état du premier groupe de protection conformément aux informations de connectivité détectées du premier tunnel actif et aux informations de connectivité du premier tunnel d'attente.

16. Appareil (40) selon l'une quelconque des revendications 11 à 14, comprenant en autre :
un deuxième module de détection (67), configuré pour détecter une connectivité du deuxième tunnel actif et du deuxième tunnel d'attente ; et
un deuxième module de maintien d'état (69), configuré pour maintenir un état du deuxième groupe de protection conformément aux informations de connectivité détectées du deuxième tunnel actif et aux informations de connectivité du deuxième tunnel d'attente.

17. Appareil (70) destiné à protéger un trafic de service, dans lequel l'appareil est utilisé pour un réseau de type Réseau Virtuel Privé de Couche 3, L3VPN, à Protocole de Passerelle de Frontière, BGP, ou à Commutation d'Etiquettes Multi-Protocole, MPLS, ou un réseau à Hiérarchie de VPN, HoVPN, comprenant un émetteur-récepteur (71), une mémoire (72) et un processeur (73), dans lequel
l'émetteur-récepteur (71) est configuré pour recevoir et réacheminer du trafic ;
la mémoire (72) est couplée au processeur (73), la mémoire (72) stockant au moins l'un d'un programme et d'une application ;
le processeur (73) est configuré pour appeler ledit au moins un d'un programme et d'une application afin de mettre en oeuvre un procédé selon la revendication 1 pour protéger un trafic de service.
